# EUROPÄISCHE PATENTSCHRIFT

(11) **EP 0 512 391 B1**
(45) Veröffentlichungstag und Bekanntmachung des Hinweises auf die Patenterteilung: **02.11.1994**
(21) Anmeldenummer: 92107297.1
(22) Anmeldetag: 29.04.1992
(51) Int. Cl.: B01D 25/172, B01D 25/38

(54) **Verschiebevorrichtung für Filterplatten an einer Filterpresse**
Shifting device for filter plates in a filter press
Dispositif de déplacement de plaques-filtres dans un filtre-presse

(30) Priorität: 08.05.1991 DE 4115105
(43) Veröffentlichungstag der Anmeldung: 11.11.1992
(73) Patentinhaber: Erich Netzsch GmbH & Co. Holding KG, D-95100 Selb (DE)
(72) Erfinder: Tröger, Gerhard, W-8670 Hof (DE)
(74) Vertreter: Goetz, Rupert, Dipl.-Ing.

(56) Entgegenhaltungen:
- CH-A- 513 666
- DE-A- 1 812 995
- DE-A- 3 742 363
- FR-A- 2 382 917

## Beschreibung

Die Erfindung betrifft eine Verschiebevorrichtung für Filterplatten an einer Filterpresse nach dem Oberbegriff des Anspruchs 1.

Bei einer aus der DE 3742363 C1 bekannten Verschiebevorrichtung dieser Gattung ist an einem Verschiebewagen mit umsteuerbarem Antrieb eine Pilotklinke gelagert, die gegen Ende jeder Rückwärtsfahrt hinter der vordersten, noch nicht verschobenen Filterplatte einrastet, sie bei der nächsten Vorwärtsfahrt mitnimmt und dabei eine vom Bewegungswiderstand dieser Filterplatte hervorgerufene Steuerbewegung ausführt. Am Verschiebewagen sind in Abständen hinter der Pilotklinke, die größer als die Dicke der Filterplatten sind, mehrere Folgeklinken gelagert. Diese nehmen von sich aus eine Ruhestellung ein, in der sie sich bei Vor- und Rückwärtsfahrt ohne Einwirkung auf die Filterplatten an diesen vorbeibewegen lassen. Die Pilotklinke ist mit den Folgeklinken durch Steuerglieder verbunden, die jeweils bei der Steuerbewegung der Pilotklinke die Folgeklinken hinter den weiteren, noch nicht verschobenen Filterplatten einrasten lassen. Daher können bei jeder Vorwärtsfahrt mehrere Filterplatten gleichzeitig mitgenommen und auseinandergerückt werden. Am Verschiebewagen ist ein Begrenzungsglied angeordnet, das sich aus einer Ruhestellung in eine Begrenzungsstellung bringen läßt, in der es die Beweglichkeit der Pilotklinke auf das Einrasten hinter der jeweils vordersten, noch nicht verschobenen Filterplatte begrenzt und somit die Steuerbewegung verhindert, so daß die Folgeklinken unwirksam bleiben und somit, falls erwünscht, nur die erste noch nicht verschobene Filterplatte vom Verschiebewagen mitgenommen wird.

Bei dieser bekannten Verschiebevorrichtung kann es vorkommen, daß eine zum Aufrichten der Folgeklinken ausreichende Steuerbewegung der Pilotklinke ungewollt auch dann unterbleibt, wenn die erste noch nicht verschobene Filterplatte sich entweder von der Pilotklinke so leicht verschieben läßt oder von einem zwischen dieser und der nächsten Filterplatte vorzeitig herausfallenden Filterkuchen so vorgeschoben wird, daß sie der Pilotklinke keinen ausreichenden Widerstand bietet, um ein vollständiges Aufrichten der Pilotklinke zu erzwingen.

Der Erfindung liegt deshalb die Aufgabe zugrunde, eine Verschiebevorrichtung für Eilterplatten derart weiterzubilden, daß auch bei außergewöhnlich leichter Verschiebbarkeit oder von einem Filtelkuchen hervorgerufener vorzeitiger Verschiebung der jeweils vordersten Filterplatte eine erwünschte Mitnahme einer oder mehrerer weiterer Filterplatten gewährleistet ist.

Die Aufgabe ist erfindungsgemäß ausgehend von einer Verschiebevorrichtung der genannten Gattung dadurch gelöst, daß das Pilotsteuerglied so vorgespannt ist, daß es in ausgerastetem Zustand auf die Pilotklinke ein Drehmoment ausübt, welches deren Einschwenken hinter der vordersten Filterplatte unabhängig von deren Bewegungswiderstand vollendet.

Auf diese Weise ist sichergestellt, daß immer dann, wenn mit jeder Vorwärtsbewegung des Verschiebewagens die Mitnahme von mehr als einer Filterplatte angestrebt wird, die Pilotklinke sich nicht nur in einem zum Mitnehmen der vordersten Filterplatte erforderlichen Maß aufrichtet, sondern darüber hinaus eine ausreichende Steuerbewegung ausführt, um auch die Folgeklinke(n) aufzurichten.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten erläutert. Es zeigen:
- Fig. 1: eine Seitenansicht einer Filterpresse mit einer erfindungsgemäßen Verschiebevorrichtung in einer ersten Betriebsstellung;
- Fig. 2: einen vergrößerten Ausschnitt aus Fig. 1;
- Fig. 3: einen entsprechenden Ausschnitt in einer zweiten Betriebsstellung, die unmittelbar auf die in Fig. 1 und 2 dargestellte folgt;
- Fig. 4: einen entsprechenden Ausschnitt in einer Ruhestellung der Verschiebevorrichtung;
- Fig. 5: einen entsprechenden Ausschnitt beim Verschieben einer einzelnen Filterplatte; und
- Fig. 6: einen entsprechenden Ausschnitt beim Reinigen einer Filterplatte.

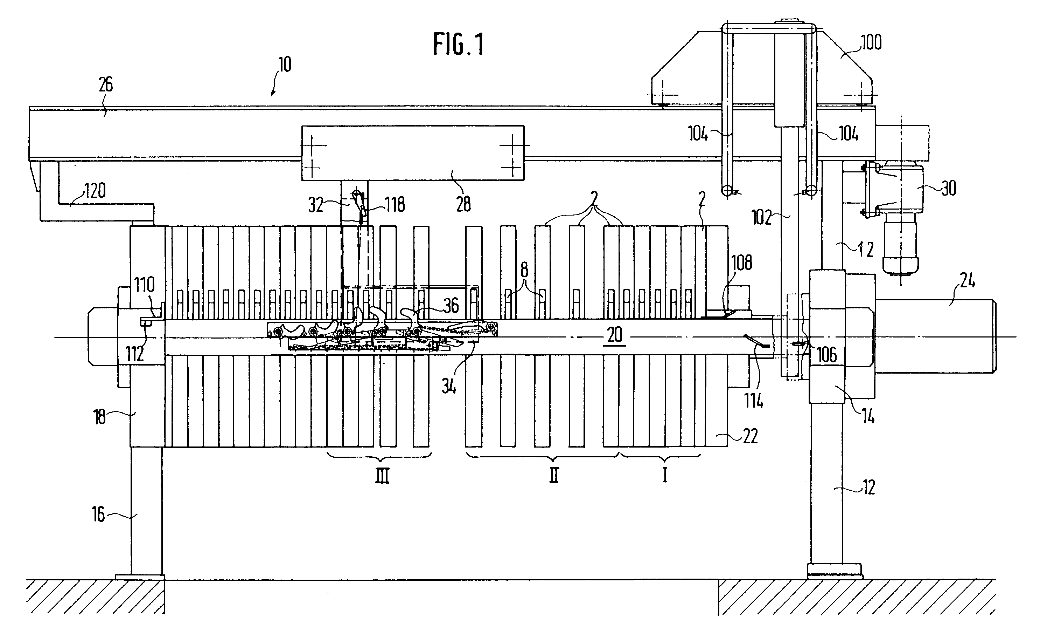

Gemäß Fig. 1 ist eine größere Anzahl Filterplatten 2 hintereinander angeordnet. Jede der Filterplatten 2 hat eine Vorderseite 4 und eine Rückseite 6 sowie ein Paar seitliche Arme 8. Die Filterplatten 2 sind an einem Gestell 10 aufgehängt, das im wesentlichen aus einem vorderen Ständerpaar 12 mit einer vorderen Traverse 14, einem hinteren Ständerpaar 16 mit einer hinteren Traverse 18 und einem Paar Holme 20 besteht.

Die Holme 20 erstrecken sich in einer gemeinsamen waagerechten Ebene parallel zueinander zwischen den beiden Traversen 14 und 18. Die Filterplatten 2 sind im Zwischenraum zwischen den beiden Holmen 20 angeordnet und auf ihnen mit den seitlichen Armen 8 verschiebbar abgestützt. Der Raum, in dem die Filterplatten 2 verschiebbar sind, ist einerseits, in Fig. 1 links, durch die hintere Traverse 18 und andererseits, in Fig. 1 rechts, durch eine Kopfplatte 22 begrenzt. Die Kopfplatte 22 ist ebenfalls in Längsrichtung der Holme 20 verschiebbar geführt und mit der Kolbenstange einer Kolbenzylindereinheit 24 verbunden, deren Zylinder parallel zu den Holmen 20 angeordnet und an der vorderen Traverse 14 befestigt ist.

Zum Filtrieren werden die Filterplatten 2, wie in Fig. 1 angedeutet, von der Kolbenzylindereinheit 24 zwischen der Kopfplatte 22 und der hinteren Traverse 18 zu einem Paket zusammengespannt. Sobald ein Filtriervorgang abgeschlossen ist, wird die Kopfplatte 22 von der Kolbenzylindereinheit 24 in ihre vordere Endstellung, in Fig. 1 nach rechts, gezogen. Dadurch entsteht zwischen einer an der Kopfplatte 22 befestigten, nur an ihrer Rückseite 6 zum Filtrieren ausgebildeten Filterplatte 2 und des nächsten Filterplatte 2 eine Pressenöffnung, die anschließend zum Verschieben der weiteren Filterplatten 2 genutzt wird, damit zwischen diesen gebildete Filterkuchen herausfallen und die Filterplatten nötigenfalls gewaschen werden können. Zu diesem Zweck ist die Verschiebevorrichtung vorgesehen, die im folgenden beschrieben wird.

Auf den Ständerpaaren 12 und 16 ist ein Paar waagerechte Schienen 26 befestigt, die sich oberhalb der Holme 20 parallel zu diesen erstrecken. Die Schienen 26 sind von je einem I-Träger gebildet und tragen einen Verschiebewagen 28, der an ihren unteren Flanschen geführt und von einem Antrieb 30 längs der Schienen 26 vor- und zurückfahrbar ist. Der Antrieb 30 ist ein elektrischer Getriebemotor, der jeweils bei Überschreitung eines bestimmten Drehmoments selbsttätig umsteuert, also die Fahrtrichtung des Verschiebewagens 28 umkehrt.

Vom Verschiebewagen 28 ragen zwei parallele Säulen 32 senkrecht nach unten, an deren unteren Enden je eine Tragplatte 34 befestigt ist. Die beiden Tragplatten 34 sind in je einer senkrechten Ebene außerhalb der beiden Holme 20 angeordnet und haben die Form je eines langgestreckten Rechtecks, dessen Längsrichtung zu den Holmen 20 parallel ist. An jeder Tragplatte 34 ist eine Pilotklinke 36 mittels eines Lagers 38 gelagert, dessen Achse normal zur Tragplatte 34 angeordnet ist. Da in den Zeichnungen nur eine der beiden Tragplatten 34 samt daran gelagerter Pilotklinke 36 und weiteren zugeordneten Bauteilen sichtbar ist, werden die Pilotklinken 36 sowie alle übrigen Bauteile, die auf beiden Seiten der Filterpresse je einmal vorhanden sind, im folgenden in der Einzahl beschrieben.

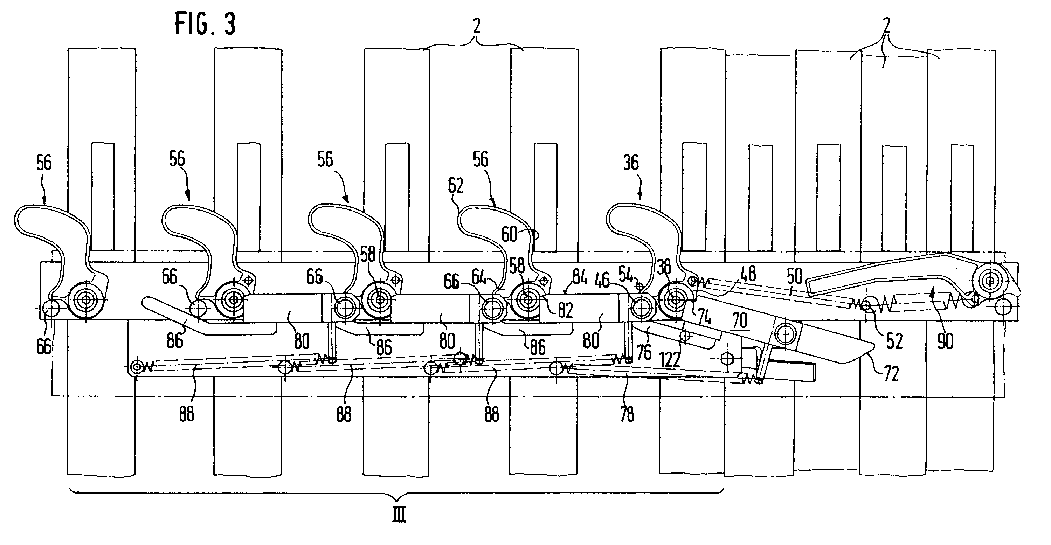

Die Pilotklinke 36 hat eine Mitnahmefläche 40, die in einer in Fig. 1 bis 3, 5 und 6 gezeichneten, aufrechten Stellung der Pilotklinke senkrecht steht und bei jedem Arbeitszyklus an die Rückseite des seitlichen Armes 8 einer der Filterplatten 2 anlegbar ist. Von der Mitnahmefläche 40 erstreckt sich die Pilotklinke 36 bogenförmig zu einem in deren aufrechter Stellung nach hinten weisenden Ende 42. In der aufrechten Stellung ebenfalls nach hinten weisend, ist an der Pilotklinke 36 eine Nase 44 ausgebildet, die gemeinsam mit einem an der Tragplatte 34 befestigten, zur Achse des Lagers 38 parallelen Anschlag- und Lagerbolzen 46 die Pilotklinke 36 hindert, über ihre aufrechte Stellung hinaus nach hinten zu kippen.

In einem in der aufrechten Stellung vor und etwas über dem Lager 38 angeordneten Bereich der Pilotklinke 36 ist ein Vorsprung 48 angeordnet. An dem Vorsprung 48 ist ein Ende einer Feder 50 angehängt, die mit ihrem anderen Ende weiter vorne an einem an der Tragplatte 34 befestigten Zapfen 52 angehängt ist. Die Feder 50 ist ständig bestrebt, die Pilotklinke 36 in eine Stellung zu schwenken, in der sie nur soweit aufgerichtet ist, daß sie hinter einen der seitlichen Arme 8 eingreifen kann, um sich an diesem vollständig aufzurichten, wenn der Verschiebewagen 28 vorwärtsbewegt wird. An der Pilotklinke 36 ist ferner nahe der Nase 44 ein seitlich wegragender Stift 54 befestigt, der zum Niederwerfen der Pilotklinke 36 nach dem Verschieben sämtlicher Filterplatten 2 dient.

An jeder der beiden Tragplatten 34 ist hinter der Pilotklinke 36 eine erste Folgeklinke 56 in einem Lager 58 schwenkbar gelagert. Die Achse des Lagers 58 ist in der gleichen waagerechten Ebene wie die Achse des Lagers 38 parallel zu dieser in einem Abstand a angeordnet, der merklich größer, im dargestellten Beispiel beinahe doppelt so groß ist wie die Dicke jeder einzelnen Filterplatte 2. In gleichen Abständen hinter der ersten Folgeklinke 56 sind an der Tragplatte 34 weitere Folgeklinken 56 gelagert; im dargestellten Beispiel sind beiderseits der Filterpresse je vier Folgeklinken 56 vorgesehen.

Die Folgeklinken 56 gleichen der Pilotklinke 36 und haben je eine Mitnahmefläche 60, ein Ende 62 und eine Nase 64. Die Nase 64 bestimmt zusammen mit einem an der Tragplatte 34 befestigen Anschlag- und Lagerbolzen 66 die aufrechte Stellung der Folgeklinke 56, in der die Mitnahmefläche 60 ungefähr senkrecht ist und das Ende 62 im wesentlichen nach hinten weist. Ferner ist an jeder Folgeklinke 56 ein Vorsprung 68 in Form eines achsparallelen Bolzens angeordnet.

In einem Abstand vor und unterhalb des Lagers 38 ist an der Tragplatte 34 ein starres Pilotsteuerglied 70 schwenkbar gelagert. An diesem sind vorne eine nach unten weisende Schrägfläche 72 und hinten eine Aussparung 74 ausgebildet. Das Pilotsteuerglied 70 hat einen nach hinten ragenden Fortsatz 76, der unter der Ruhestellung der ersten Folgeklinke 56 endet. Eine Feder 78, die das Pilotsteuerglied 70 mit der Tragplatte 34 verbindet, ist ständig bestrebt, das hintere Ende des Pilotsteuergliedes 70 nach oben zu schwenken. Dies hat zur Folge, daß das Pilotsteuerglied 70 normalerweise, d.h. in der Stellung gemäß Fig. 1 bis 3, ein aufrichtendes Drehmoment auf die Pilotklinke 36 ausübt.

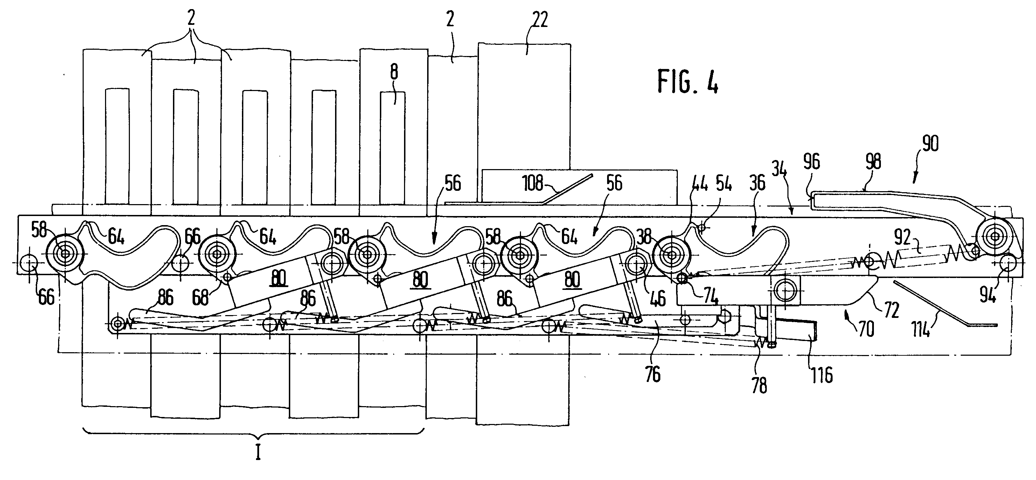

In einer Ruhestellung gemäß Fig. 4 ist jedoch der Vorsprung 48 derart in die Aussparung 74 eingerastet, daß die Pilotklinke 36 daran gehindert ist, sich aufzurichten. Dabei liegt das Ende 42 der Pilotklinke 36 ebenso wie ihre Nase 44 unterhalb des oberen Randes der Tragplatte 34, der seinerseits in einem kleinen Abstand unterhalb des unteren Randes der seitlichen Arme 8 der Filterplatten 2 angeordnet ist. Demzufolge kann die Pilotklinke 36 in ihrer Ruhestellung weder bei Vorwärts- noch bei Rückwärtsfahrt gegen die seitlichen Arme 8 stoßen.

Entsprechendes gilt für die Folgeklinken 56, die sämtlich von sich aus, infolge ihres Eigengewichts, bestrebt sind, in ihrer Ruhestellung zu bleiben. Die Ruhestellung der vordersten Folgeklinke 56 ist durch den Anschlag- und Lagerbolzen 66 bestimmt; in gleicher Weise ist die Ruhestellung der weiteren Folgeklinken 56 durch je einen der Bolzen 66 bestimmt.

Auf dem Anschlagbolzen 46 für die Pilotklinke 36 sowie auf dem Anschlagbolzen 66 für die erste und zweite Folgeklinke 56 ist je ein starres Folgesteuerglied 80 an der Tragplatte 34 schwenkbar gelagert. Jedes Folgesteuerglied 80 hat an seinem hinteren Ende oben eine Schrägfläche 82 und eine sich daran in Richtung nach vorne anschließende gerade Oberfläche 84. Ferner hat jedes Folgesteuerglied 80 einen nach hinten ragenden Fortsatz 86, der unter die übernächste Folgeklinke 56 greift, um diese aus einer Ruhestellung nach oben zu schwenken. Dies geschieht unter dem Einfluß einer Feder 88, die an der Tragplatte 34 angehängt und ständig bestrebt ist, das zugehörige Folgesteuerglied 80 mit seinem hinteren Ende nach oben zu schwenken. Die Flächen 82 und 84 jedes Folgesteuergliedes 80 wirken mit dem Vorsprung 68 der nächsthinteren Folgeklinke 56 folgendermaßen zusammen:

Solange die betreffende Folgeklinke 56 ihre Ruhelage einnimmt, liegt die Schrägfläche 82 des zugehörigen Folgesteuergliedes 80 derart am Vorsprung 68 an, daß die unter dem Einfluß der Feder 88 auf diesen Vorsprung 68 ausgeübte Kraft durch die Lagerachse der betreffenden Folgeklinke 56 verläuft und somit kein Drehmoment auf diese ausübt. Erst wenn die erste Folgeklinke 56 vom Fortsatz 76 des Pilotsteuergliedes 70 etwas aus ihrer Ruhelage angehoben worden ist, übt das zugehörige erste Folgesteuerglied 80 zuerst mit seiner geraden Oberfläche 84 und dann mit seiner Schrägfläche 82 ein aufrichtendes Moment auf die erste Folgeklinke 56 aus. Entsprechendes gilt sinngemäß für die zweite und dritte Folgeklinke 56.

Nahe dem vorderen Ende der Tragplatte 34 ist in einem erheblichen Abstand vor dem Lager 38 der Pilotklinke 36 eine Anfahrklinke 90 ebenfalls um eine zur Achse des Lagers 38 parallele Achse schwenkbar gelagert. An der Anfahrklinke 90 ist das vordere Ende einer Feder 92 angehängt, die mit ihrem hinteren Ende an der Tragplatte 34 angehängt und ständig bestrebt ist, die Anfahrklinke 90 in einer oberen Endstellung zu halten, die in Fig. 4 bis 6 abgebildet und durch einen Anschlag 94 an der Tragplatte 34 bestimmt ist. In dieser Stellung erstreckt sich die Anfahrklinke 90 derart nach hinten, daß eine an ihr ausgebildete hintere Stirnfläche 96 bei Rückwärtsfahrt des Verschiebewagens 28 gegen die Vorderseite des Armes 8 einer der Filterplatten 2 stößt.

Auf den oberen Flanschen der Schienen 26 ist ein Reinigungswagen 100 geführt, der bei Bedarf mit dem Verschiebewagen 28 zu gemeinsamer Vor- und Rückwärtsfahrt kuppelbar ist. Vom Reinigungswagen 100 ragt ein Paar Säulen 102 senkrecht nach unten, an denen eine Düsenrohranordnung 104 auf- und abbeweglich geführt ist. In der Nähe des unteren Endes jeder der Säulen 102 ist ein Nocken 106 befestigt, auf den die Schrägfläche 72 des Pilotsteuergliedes 70 auffährt, wenn der Reinigungswagen 100 an den Verschiebewagen 28 herangefahren wird, oder umgekehrt.

An beiden Seiten der Kopfplatte 22 ist je eine Abweisschiene 108 befestigt, welche die zugehörige Anfahrklinke 90 in einer unwirksamen unteren Stellung hält, wenn der Verschiebewagen 28 soweit vorwärts bewegt worden ist, daß keine der Filterplatten 2 mit ihren seitlichen Armen 8 auf die Anfahrklinke 90 einwirken kann.

An beiden Seiten der hinteren Traverse 18 ist je eine Niederwerfkufe 110 befestigt, die eine Ausschaltlasche 112 für die zugehörige Pilotklinke 36 aufweist. Den Pilotklinken 36 ist ferner je eine an der Kopfplatte 22 befestigte Einschaltkufe 114 zugeordnet. Schließlich ist den Pilotklinken 36 zum Begrenzen ihres Schwenkbereichs je ein an der Tragplatte 34 gelagerter Kipphebel 116 zugeordnet. Beide Kipphebel 116 sind gemeinsam von einem Handhebel 118 gesteuert, der wahlweise für Einzeltransport oder für Gruppentransport der Filterplatten 2 einstellbar ist und sich in jeder Stellung des Verschiebewagens 28 gut erreichen läßt. Die Schienen 26 sind an ihren hinteren Enden über je eine nach hinten auskragende Stütze 120 am hinteren Ständerpaar 16 abgestützt.

Die beschriebene Vorrichtung arbeitet folgendermaßen:
Es sei angenommen, die Filterpresse sei nach einem Filtriervorgang geöffnet, die Kopfplatte 22 also ganz nach vorne verschoben worden, und bei einem ersten Arbeitszyklus der Verschiebevorrichtung sei eine erste Gruppe I von fünf Filterplatten 2 nach vorne verschoben worden. Beim zweiten Arbeitszyklus ist eine zweite Gruppe II von wiederum fünf Filterplatten 2 nach vorne verschoben worden und dabei hat die vorderste Filterplatte der zweiten Gruppe II die Filterplatten der ersten Gruppe I lückenlos zusammengeschoben; die Filterplatten der zweiten Gruppe II haben voneinander am Ende des zweiten Arbeitszyklus den gleichen Abstand a wie die Lager 58 voneinander und das vorderste Lager 58 vom Lager 38. Die weiteren Filterplatten, darunter die folgende Gruppe III von fünf Filterplatten 2 sind dabei noch dicht aneinanderliegend stehengeblieben.

Der nächste Arbeitszyklus der Verschiebevorrichtung hat gemäß Fig. 1 damit begonnen, daß der Verschiebewagen 28 erneut rückwärts gefahren ist. Dabei ist die Anfahrklinke 90 von der Abweisschiene 108 soweit nach unten gedrückt worden, daß sie anschließend mit ihrer Rückenfläche 98 an den unteren Rändern der seitlichen Arme 8 der Filterplatten 2 der ersten und zweiten Gruppe I und II entlanggeglitten ist. Die Länge der Rückenfläche 98 ist mindestens ebensogroß wie der Lagerabstand a; infolgedessen kann die Anfahrklinke 90 bei der Rückwärtsfahrt erst dann in ihre durch den Anschlag 94 bestimmte obere Endstellung schwenken, wenn sie sich am Arm 8 der hintersten Filterplatte 2 der zweiten Gruppe II vorbeibewegt hat. Die Pilotklinke 36 stößt bei der Rückwärtsfahrt zwar gegen die seitlichen Arme 8 der genannten Filterplatten, wird von diesen aber - gemäß den Zeichnungen im Uhrzeigersinn - nach unten gedrückt, so daß sie nicht hängenbleiben kann.

Nachdem die Pilotklinke 36 sich auch am Arm 8 der vordersten, noch nicht verschobenen Filterplatte 2 der dritten Gruppe III vorbeibewegt hat, und ehe sie Gelegenheit gehabt hat, sich am Arm 8 der nächstfolgenden Filterplatte 2 vorbeizubewegen, stößt die Anfahrklinke 90 mit ihrer hinteren Stirnfläche 96 gegen die Vorderseite des Armes 8 der vordersten, noch nicht verschobenen Filterplatte 2, so daß der Verschiebewagen 28 angehalten und sein Antrieb 30 umgesteuert wird.

Bei der nun beginnenden Vorwärtsfahrt dringt die Pilotklinke 36 immer weiter in den Zwischenraum zwischen den Armen 8 der vordersten und zweitvordersten Filterplatten 2 der dritter Gruppe III ein, wobei sie sich mit ihrem Ende 42 an der Vorderseite des Armes 8 der zweitvordersten Filterplatte dieser Gruppe abstützt und eine Hebelwirkung auf den Arm 8 der vordersten Filterplatte ausübt, so daß diese vorwärts bewegt und dabei von der zweitvordersten Filterplatte der dritten Gruppe III getrennt wird. Dabei führt die Pilotklinke 36 allmählich eine Steuerbewegung in Gestalt einer fortgesetzten Rückwärtsschwenkung aus, bis ihre Nase 44 gegen den Anschlag- und Lagerbolzen 46 stößt.

Das Aufrichten der Pilotklinke 36 wird vom Pilotsteuerglied 70 unterstützt, das unter der Einwirkung der Feder 78 mit einer an seine hintere Aussparung 74 angrenzenden Fläche gegen den Vorsprung 48 eine nach oben gerichtete Kraft ausübt. Das dadurch auf die Pilotklinke 36 einwirkende aufrichtende Moment ist stärker als das entgegengerichtete, von der Feder 50 auf die Pilotklinke 36 ausgeübte Moment, so daß sich die Pilotklinke 36 auf jeden Fall vollständig aufrichtet, d.h. bis zum Anliegen ihrer Nase 44 am Anschlag- und Lagerbolzen 46. Die Pilotklinke 36 richtet sich deshalb auch dann vollständig auf, wenn der Arm 8 der von ihr zu verschiebenden Filterplatte 2 keinen Widerstand ausübt.

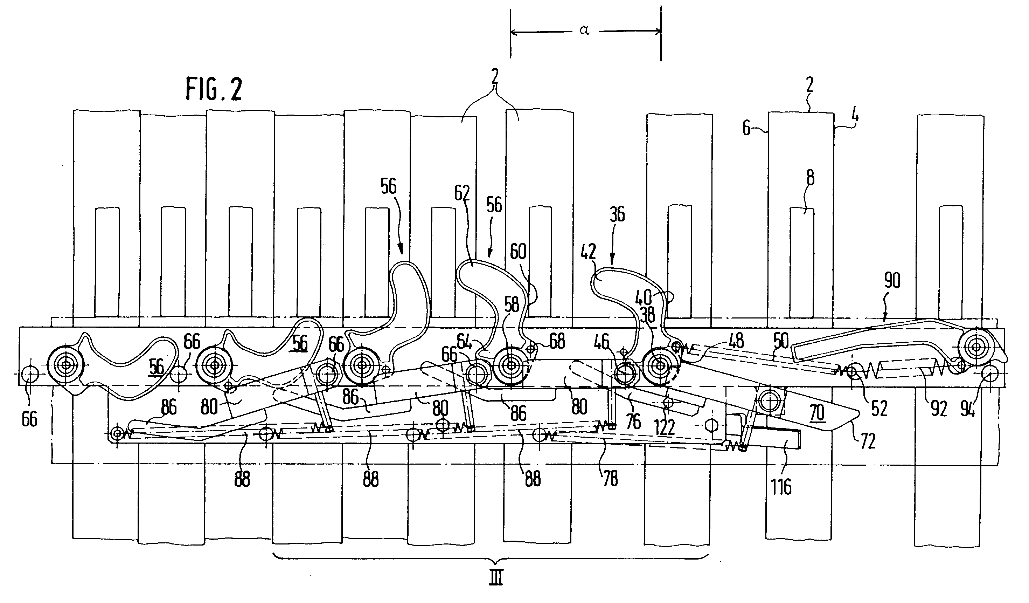

Die an die Aussparung 74 angrenzende Fläche des Pilotsteuergliedes 70 sowie der damit Zusammenwirkende Vorsprung 48 der Pilotklinke 36 und der Fortsatz 76 des Pilotsteuergliedes 70 sind so gestaltet, daß dieser Fortsatz die erste Folgeklinke 56 erst dann nach oben schwenkt, wenn diese sich bereits unter dem Arm 8 befindet, an dem sie sich anschließend aufrichten soll. Entsprechendes gilt für die weiteren Folgeklinken 56. Auf diese Weise ist sichergestellt, daß auch sämtliche Folgeklinken 56 nacheinander aufgerichtet werden. Während also gemäß Fig. 1 und 2 die erste Filterplatte 2 der dritten Gruppe III schon von der Pilotklinke 36 mitgenommen wird, richten sich die Folgeklinken 56 nacheinander in den Lücken zwischen den Armen 8 der zweiten bis fünften Filterplatte 2 dieser Gruppe III auf, so daß bei jeder Vorwärtsbewegung des Verschiebewagens 8 fünf Filterplatten 2 transportiert werden.

Die Bewegungsrichtung des Verschiebewagens 28 kehrt sich um, wenn die von der Pilotklinke 36 vorgeschobene vorderste Filterplatte 2 der dritten Gruppe III an die hinterste Filterplatte der Gruppe II angestoßen ist und die Filterplatten dieser Gruppe II lückenlos zusammengeschoben hat, so daß der Verschiebewiderstand wieder stark ansteigt. Zu diesem Zeitpunkt ist die Anfahrklinke 90 unter den Arm 8 der zuletzt verschobenen Filterplatte 2 abgetaucht; sie kann sich erst wieder aufrichten, wenn sie bei der nächsten Rückwärtsfahrt des Verschiebewagens 28 zwischen den Armen 8 eine Lücke findet, die deutlich größer ist als der Abstand, mit dem die zuletzt transportierten Filterplatten 2 der Gruppe III stehengeblieben sind.

Die beschriebenen Vorgänge wiederholen sich, bis alle Filterplatten 2 nach vorne verschoben worden sind; die Anzahl der Filterplatten 2 in der zuletzt zu verschiebenden Gruppe kann gleich oder kleiner als fünf sein.

Wenn alle Filterplatten 2 verschoben worden sind, werden bei einer letzten Rückfahrt des Verschiebewagens 28 nacheinander von hinten her die Folgeklinken 56 und zuletzt die Pilotklinke 36 gegen die von den Federn 88 bzw. 78 und 50 ausgeübten Drehmomente nach unten geschwenkt. Dabei fährt der Stift 54 an der Pilotklinke 36 gegen die Ausschaltlasche 112 am hinteren Ende der Niederwerfkufe 110, wodurch die Pilotklinke 36 soweit nach unten geschwenkt wird, daß ihr Vorsprung 48 in die Aussparung 74 am hinteren Ende des Pilotsteuergliedes 70 einrastet. So wird die Pilotklinke 36 in ihrer Ruhestellung festgehalten.

Am Ende seiner letzten Rückwärtsfahrt stößt der Verschiebewagen 28 gegen die nach hinten auskragenden Stützen 120. Der dadurch erhöhte Bewegungswiderstand bewirkt, daß der Motor 30 wieder auf Vorwärtsfahrt umgeschaltet wird. Da die Pilotklinke 36 vom Pilotsteuerglied 70 tiefgestellt gehalten bleibt, werden auch die Folgeklinken 56 nicht aktiviert, so daß der Verschiebewagen 28 nun leer in seine Parkstellung zurückkehrt. Kurz ehe er diese erreicht, unterfährt ein am Fortsatz 76 des Pilotsteuergliedes 70 befestigter Einschaltstift 122 die Einschaltkufe 114, wodurch das hintere Ende des Pilotsteuergliedes 70 soweit nach unten geschwenkt wird, daß die Pilotklinke 36 wieder freigegeben wird.

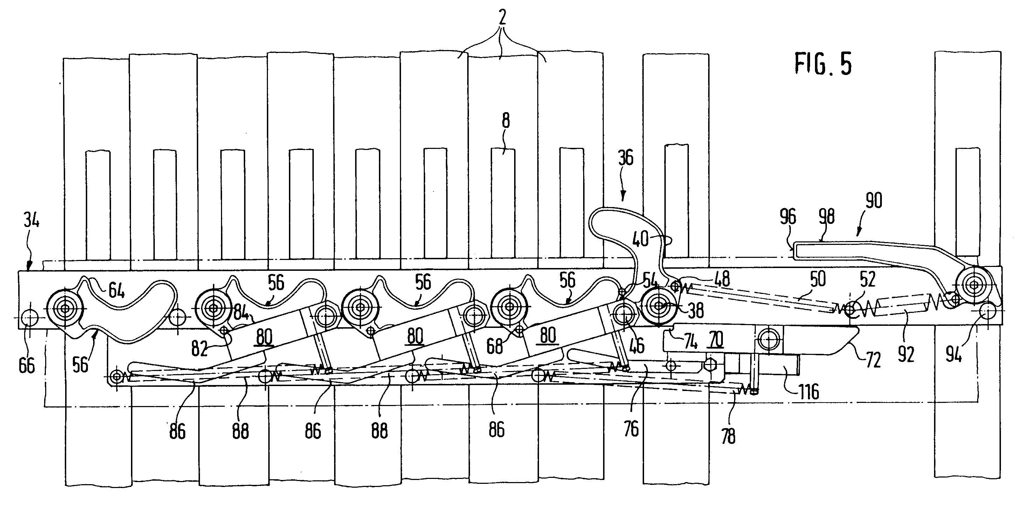

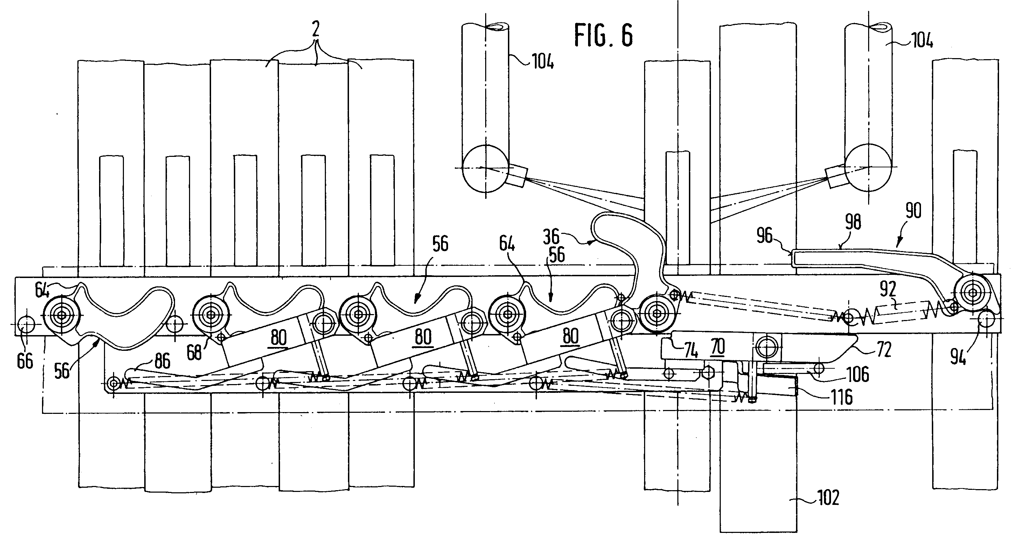

Wenn die Filterplatten 2 nicht gruppenweise sondern einzeln transportiert werden sollen, wird der Handhebel 118 derart umgelegt, daß die Kipphebel 116 aus ihrer in Fig. 1 bis 4 abgebildeten unteren Stellung in eine obere Stellung gemäß Fig. 5 und 6 geschwenkt werden, in der sie den Schwenkbereich des zugehörigen Pilotsteuergliedes 70 so begrenzen, daß sein Fortsatz 76 die erste Folgeklinke 56 nicht hochschwenken kann. Infolgedessen werden auch alle weiteren Folgeklinken 56 nicht aktiviert, so daß der Verschiebewagen 28 bei jeder Vorwärtsbewegung nur die jeweils vorderste Filterplatte 2 mitnehmen kann.

Die Umschaltung von Einzeltransport auf Gruppentransport und umgekehrt kann ohne Einschränkung während jeder Arbeitsphase der Verschiebevorrichtung vorgenomen werden.

Wenn die Filterplatten 2 gereinigt werden sollen, müssen sie einzeln verschoben werden. Der Reinigungswagen 100, der zu diesem Zweck mit dem Verschiebewagen 28 gekuppelt wird, sorgt mit seinen Nocken 106 selbsttätig für den erforderlichen Einzeltransport der Filterplatten 2. Dies geschieht dadurch, daß das Pilotsteuerglied 70 beim Erreichen der Parkstellung mit seiner Schrägfläche 72 auf den Nocken 106 am Reinigungswagen 100 aufgleitet, so daß der Schwenkbereich des Pilotsteuergliedes 70, solange der Verschiebewagen 28 mit dem Reinigungswagen 100 gekuppelt bleibt, derart begrenzt wird, daß der Fortsatz 76 die erste Folgeklinke 56 nicht hochschwenken kann und somit auch alle weiteren Folgeklinken in ihrer Ruhestellung bleiben. Sobald die reinigungsbedürftigen Filterplatten gereinigt worden sind, wird der Verschiebewagen 28 wieder vom Reinigungswagen 100 entkuppelt, so daß dieser alleine in der Parkstellung stehenbleibt und der Verschiebewagen 28 automatisch für Gruppentransport weiterer Filterplatten 2 bereit ist.

## Patentansprüche

1. Verschiebevorrichtung für Filterplatten (2) an einer Filterpresse, mit
- einem Verschiebewagen (28) mit umsteuerbarem Antrieb (30) für Vor- und Rückwärtsfahrt in Öffnungs- und Schließrichtung der Filterpresse,
- einer Pilotklinke (36), die am Verschiebewagen (28) gelagert und von einer Feder (50) so vorgespannt ist, daß sie jeweils zu Beginn einer Vorwärtsfahrt hinter der vordersten noch nicht verschobenen Filterplatte (2) einschwenkbar ist, um diese mitzunehmen,
- einem Pilotsteuerglied (70), das von einem Hebel gebildet und an einem Vorsprung (48) der Pilotklinke (36) einrastbar ist, um diese in einer Ruhestellung zu halten, in der sich der Verschiebewagen (28) an den Filterplatten (2) vorbei, ohne diese mitzunehmen, vorwärtsbewegen läßt,
- mindestens einer Folgeklinke (56), die ebenfalls am Verschiebewagen (28) gelagert und zu Beginn einer Vorwärtsfahrt hinter der zweitvordersten noch nicht verschobenen Filterplatte (2) einschwenkbar ist, um diese mitzunehmen, und
- mindestens einem Folgesteuerglied (80), das in einer Endphase des Einschwenkens der Pilotklinke (36) hinter der vordersten noch nicht verschobenen Filterplatte (2) ein Drehmoment in Einschwenkrichtung auf die dahinter angeordnete Folgeklinke (56) ausübt,
dadurch **gekennzeichnet,** daß das Pilotsteuerglied (70) so vorgespannt ist, daß es in ausgerastetem Zustand auf die Pilotklinke (36) ein Drehmoment ausübt, welches deren Einschwenken hinter der vordersten Filterplatte (2) unabhängig von deren Bewegungswiderstand vollendet.

2. Vorrichtung nach Anspruch 1,
dadurch **gekennzeichnet,** daß das Pilotsteuerglied (70) einen Fortsatz (76) aufweist, mit dem es ein Drehmoment in Einschwenkrichtung auf die nächste Folgeklinke (56) ausübt.

3. Vorrichtung nach Anspruch 2,
dadurch **gekennzeichnet,** daß das Folgesteuerglied (80) von einem Hebel gebildet und so vorgespannt ist, daß es ein Drehmoment in Einschwenkrichtung auf die nächste Folgeklinke (56) ausübt, sobald diese vom Pilotsteuerglied (70) aus einer Ruhestellung in Einschwenkrichtung herausbewegt worden ist.

4. Vorrichtung nach einem der Ansprüche 1 bis 3,
dadurch **gekennzeichnet,** daß das Folgesteuerglied (80) einen Fortsatz (86) aufweist, mit dem es ein Drehmoment in Einschwenkrichtung auf die übernächste Folgeklinke (56) ausübt.

## Claims

1. A shifting device for filter plates (2) in a filter press, comprising
- a shifting carriage (28) with reversible drive (30) for forward and backward travel in opening and closing directions of the filter press,
- a pilot pawl (36) supported on the shifting carriage (28) and biased by a spring (50) in such a manner as to be pivotable, at the beginning of each forward travel, into a position behind the frontmost filter plate (2) not yet shifted in order to take it along,
- a pilot steering member (70) formed by a lever adapted for engagement with a projection (48) at the pilot pawl (36) so as to hold the latter in an inoperative position at which the shifting carriage (28) can be moved past the filter plates (2) without entraining them,
- at least one follow-up pawl (56) likewise supported on the shifting carriage (28) and pivotable, at the beginning of a forward travel, into a position behind the second frontmost filter plate (2) not yet shifted in order to take it along, and
- at least one follow-up steering member (80) which exerts torque in forward pivoting direction on the follow-up pawl (56) disposed behind the frontmost filter plate (2) not yet shifted during a final phase of the pilot pawl (36) pivoting into engagement behind said frontmost filter plate (2),
**characterized** in that the pilot steering member (70) is biased in such a way that, when disengaged, it exerts a torque on the pilot pawl (36) to complete the pivoting into engagement of the pilot pawl behind the frontmost filter plate (2) regardless of the resistance to movement offered by said filter plate.

2. The device as claimed in claim 1, characterized in that the pilot steering member (70) includes an extension (76) by which it exerts a torque in foward pivoting direction on the next follow-up pawl (56).

3. The device as claimed in claim 2, characterized in that the follow-up steering member (80) is formed by a lever and biased in such a way that it exerts a torque in forward pivoting direction on the next follow-up pawl (56) as soon as the latter has been moved by the pilot steering member (70) in forward pivoting direction out of an inoperative position.

4. The device as claimed in any one of claims 1 to 3, characterized in that the follow-up steering member (80) includes an extension (86) by which it exerts a torque in forward pivoting direction on the next but one follow-up pawl (56).

## Revendications

1. Dispositif de déplacement pour des plaques-filtres (2) dans un filtre-presse, comportant :
- un chariot de déplacement (28) comportant un entraînement inversible (30) pour la course d'avance et de recul dans la direction d'ouverture et de fermeture du filtre-presse,
- un loquet pilote (36) qui est monté sur le chariot de déplacement (28) et qui est précontraint par un ressort (50) de telle sorte qu'il peut être rabattu respectivement au début d'une course d'avance derrière la plaque-filtre (2) située le plus en avant et pas encore déplacée, pour entraîner celle-ci,
- un organe de commande pilote (70) qui est formé par un levier et qui peut être enclenché contre une saillie (48) du loquet pilote (36) pour maintenir celui-ci dans une position de repos dans laquelle le chariot de déplacement (28) peut être déplacé vers l'avant en passant les plaques-filtres (2) sans entraîner celles-ci,
- au moins un loquet successif (56) qui est également monté sur le chariot de déplacement (28) et qui peut être rabattu au début d'une course d'avance derrière la seconde plaque-filtre (2) située le plus en avant et pas encore déplacée, pour entraîner celle-ci, et
- au moins un organe de commande de succession (80) qui exerce, dans une phase finale du rabattement du loquet pilote (36) derrière la plaque-filtre (2) située le plus en avant et pas encore déplacée, un couple de rotation en direction du rabattement sur le loquet successif (56) agencé derrière celle-ci,
caractérisé en ce que l'organe de commande pilote (70) est précontraint de telle sorte qu'il exerce à l'état déclenché un couple de rotation sur le loquet pilote (36), qui achève son rabattement derrière la plaque-filtre (2) située le plus en avant indépendamment de sa résistance au déplacement.

2. Dispositif selon la revendication 1,
caractérisé en ce que l'organe de commande pilote (70) présente une prolongation (76) par laquelle il exerce un couple de rotation en direction de rabattement sur le loquet successif suivant (56).

3. Dispositif selon la revendication 2,
caractérisé en ce que l'organe de commande de succession (80) est formé par un levier et il est précontraint de telle sorte qu'il exerce un couple de rotation en direction de rabattement sur le loquet successif suivant (56), dès que celui-ci a été déplacé par l'organe de commande pilote (70) hors d'une positon de repos en direction de rabattement.

4. Dispositif selon l'une quelconque des revendications 1 à 3,
caractérisé en ce que l'organe de commande de succession (80) présente une prolongation (86) par laquelle il exerce un couple de rotation en direction de rabattement sur le second loquet successif suivant (56).
